# EUROPÄISCHE PATENTSCHRIFT

(11) **EP 3 118 096 B1**
(45) Veröffentlichungstag und Bekanntmachung des Hinweises auf die Patenterteilung: **04.09.2019**
(21) Anmeldenummer: 16179129.8
(22) Anmeldetag: 12.07.2016
(51) Int. Cl.: B62K 19/12, B62K 19/34, B62M 6/40, B62M 6/55, B62M 6/90, B62K 19/00, B62K 19/30, H01M 2/10

(54) **FAHRRADRAHMEN, FAHRRADRAHMEN MIT ENERGIEVERSORGUNGSEINHEIT UND ELEKTROFAHRRAD HIERMIT**
BICYCLE FRAME, BICYCLE FRAME WITH ENERGY SUPPLY UNIT AND ELECTRIC BICYCLE HEREWITH
CADRE DE VELO, CADRE DE VELO AVEC UNITE D'ALIMENTATION EN ENERGIE ET VELO ELECTRIQUE ASSOCIE

(30) Priorität: 16.07.2015 DE 202015103750 U
(43) Veröffentlichungstag der Anmeldung: 18.01.2017
(73) Patentinhaber: ZEG Zweirad-Einkaufs-Genossenschaft eG, 50739 Köln (DE)
(72) Erfinder: GEHRING, Hendrik, 50733 Köln (DE)
(74) Vertreter: Althaus, Arndt

(56) Entgegenhaltungen:
- EP-A2- 2 112 060
- CH-A2- 704 921
- DE-A1-102011 005 520
- DE-U1-202013 004 427
- DE-U1-202014 005 639
- IT-A1- BO20 100 008
- JP-B2- 3 289 228

## Beschreibung

Die Erfindung betrifft einen Fahrradrahmen für Elektrofahrräder, mit mehreren miteinander verbundenen Rahmenstreben, die zumindest ein Unterrohr, ein Sattelrohr und ein Lenkkopfrohr des Fahrradrahmens bilden, mit einem Elektromotor und mit einer Einrichtung zur lösbaren Befestigung einer Energieversorgungseinheit für den Elektromotor am Unterrohr des Fahrradrahmens, wobei die Befestigungseinrichtung für die Energieversorgungseinheit ein Schwenklager für die Energieversorgungseinheit als erstes Widerlager und ein zweites Widerlager aufweist. Die Erfindung betrifft ferner einen Fahrradrahmen mit einer Energieversorgungseinheit, die ein Gehäuse mit Unterseite, Rückseite, Deckseite, Vorderseite und Querseiten, eine aufladbare Akkueinheit in einem Gehäuseinnenraum, und eine Anschlussbuchse für die Akkueinheit aufweist; schließlich betrifft die Erfindung auch ein Elektrofahrrad mit Fahrradrahmen mit integriertem Elektromotor und Energieversorgungseinheit hierfür.

Elektrofahrräder, teilweise auch Pedelecs oder bei Zulassung für höhere Geschwindigkeiten auch S-Pedelecs genannt, verfügen über einen Elektromotor, der die vom Fahrer über die Tretkurbel erzeugte Antriebskraft unterstützt. Im Normalfall wirken die Elektromotoren nur als Kraftverstärker, und die Kraftunterstützung wird je nach Bauart des Elektrofahrrades auf bestimmte Maximalgeschwindigkeiten von z.B. 25 km/h oder 45 km/h begrenzt. Die Elektromotoren können als Nabenmotor im Vorder- oder Hinterrad oder als Mittenmotor im Bereich des Tretlagers angeordnet werden und für die Elektromotoren ist zur Stromversorgung eine Energieversorgungseinheit vorzusehen, die während der Fahrt mitgeführt werden muss, im Regelfall zur Wiederaufladung demontierbar sein sollte, gut zugänglich sein sollte, das Fahrverhalten des Fahrrades möglichst nicht beeinflussen sollte und zugleich derart sicher am Fahrradrahmen befestigt werden muss, dass sie sich auch bei aufgrund unterschiedlichster Streckenverhältnisse und Fahrverhalten entstehenden Belastungen nicht löst. Eine Energieversorgungseinheit mit aufladbaren Akkueinheiten hat meist ein aus Kunststoff bestehendes Gehäuse, ein Gewicht von bis zu 5 Kilo und ein Volumen von mehreren Litern, wodurch besondere Herausforderungen hinsichtlich des Montageortes und der Montage der Energieversorgungseinheit am Fahrradrahmen des Fahrrades gestellt werden. Eine derzeit im Markt gängige Lösung besteht darin, die Energieversorgungseinheit in den Fahrradgepäckträger oberhalb des Hinterrades zu integrieren und dort in ein Aufnahmefach einzuschieben.

Aus der DE 20 2011 001 232 U1 ist bekannt, die Energieversorgungseinheit mittels einer mehrteiligen Akkuhalterung am Unterrohr eines Fahrradrahmens zu befestigen, wobei einer der Teile der Akkuhalterung als Basisteil am Fahrradrahmen mittels Schellen fest montiert ist und zugleich elektrisch mit dem Elektromotor verbunden ist. Das zweite Teil wird im Abstand vom ersten Befestigungsteil am Fahrradrahmen befestigt und ist mit einem Schloss mit Schließzapfen versehen, der mit einer Umfangswand einer von beiden vorgenannten Teilen trennbaren Akkuhalterung zusammenwirkt, die am unteren Ende mit einem Positioniervorsprung versehen ist, der ein Verschwenken von Akku und Akkuhalterung bei offenem Schloss relativ zum ersten Teil ermöglicht. Das Verschwenken der Halterung erfolgt zu einer Seite hin quer zur Fahrtrichtung, wobei das Schloss einerseits und ein Griff an der Akkuhalterung andererseits von entgegengesetzten Seiten des Fahrrades gegriffen werden müssen, um den Akku wegzuschwenken und herauszunehmen. Die mehrteilige Akkuhalterung lässt sich alternativ auch am Sattelrohr oder am Gepäckträger anbringen.

Aus der DE 10 2010 032 720 A1 ist es bekannt, die Rahmenstreben der Elektrofahrräder derart zu formen, dass die Akkumulatoren im Innern der Rahmenstreben angeordnet und dort formschlüssig gehalten werden können.

Aus der DE 10 2011 005 520 A1 ist ein Zweiradahmen bekannt, bei welchem das Unterrohr aus wenigstens drei getrennten Streben besteht, die zumindest abschnittsweise nebeneinander und voneinander beabstandet verlaufen, um einen Aufnahmeraum für eine Energieversorgungseinheit zwischen den Rahmenstreben des Unterrohrs zu schaffen. Die Ausgestaltung ist derart getroffen, dass die Energieversorgungseinheit von unten an einer oberen Strebe des mehrteiligen Unterrohrs befestigt wird. Die beiden seitlichen Streben des Unterrohrs werden partiell nach außen gebogen, um den notwendigen Bauraum zur Aufnahme der Energieversorgungseinheit zu schaffen. Hierdurch wird das Unterrohr vergleichsweise breit und die seitlichen Streben können den Fahrer beim Treten stören. Sämtliche Gewichtskräfte müssen über die Widerlager für die Energieversorgungseinheit vollständig aufgenommen werden.

Aus der DE 20 2013 103 315 U1 ist ein Fahrradrahmen bekannt, bei welchem die Energieversorgungseinheit von oben in eine nach oben offene Aufnahmevertiefung im Unterrohr einschwenkbar ist.

Aufgabe der Erfindung ist es, einen Fahrradrahmen, ein Elektrofahrrad hiermit und eine Energieversorgungseinheit hierfür zu schaffen, die bei guter Handhabbarkeit und Montagefreundlichkeit einer Energieversorgungseinheit eine sichere Befestigung derselben ermöglichen, ohne die Nachteile des Standes der Technik aufzuweisen. Zur Lösung wird mit der Erfindung für einen Fahrradrahmen vorgeschlagen, dass die das Unterrohr des Fahrradrahmens bildende Rahmenstrebe eine nach unten offene Aufnahmevertiefung für die Energieversorgungseinheit aufweist, wobei zu beiden Seiten der Aufnahmevertiefung Hohlkammern in der Rahmenstrebe gebildet sind, und/oder wobei das zweite Widerlager einen in der Aufnahmevertiefung kippbar gelagerten Riegel mit einem Riegelhaken zum lösbaren Unterfassen eines Riegelzapfens an der Energieversorgungseinheit in einer Riegelstellung des Riegels aufweist. Die Hohlkammern sorgen selbst bei nur geringer Kammerhöhe quer zur Längsrichtung der Unterstrebe für eine signifikante Aussteifung des Unterrohrs, ohne dessen Außenbreite nennenswert zu vergrößern. Die Hohlkammern können insbesondere einen in vertikaler Richtung langgestreckten ovalen Querschnitt aufweisen und die maximale Kammerhöhe ist vorzugsweise niedriger als die fünffache Wanddicke der Unterstrebe, und liegt insbesondere im Bereich der 2,5 fachen bis 4,5 fachen Wanddicke. Vorzugsweise besteht das Unterrohr aus einem Stranggussprofil mit integral angeformten Kammern.

Besonders vorteilhaft ist, wenn der Fahrradrahmen einen in den Rahmen zwischen Sattelrohr und Unterrohr integrierten Elektromotor hat, wobei das Unterrohr mittels einer Schweißverbindung am Elektromotor angeschlossen ist. Ein insbesondere als Mittelmotor integrierter Elektromotor trägt zu einer erheblichen Aussteifung des Fahrradrahmens bei einer gleichzeitig erzielbaren Gewichtseinsparung bei.

Zwischen Unterrohr und Lenkkopfrohr kann vorteilhafterweise ein vorzugsweise mehrteiliges Übergangsstück angeordnet sein, wobei das Schwenklager vorzugsweise im Übergangsstück angeordnet, vorzugsweise lösbar befestigt ist. Mit dem oder den Übergangsstücken kann eine optimale Anbindung des an dem vorderen Stirnenden eigentlich offenen Unterrohrs erzielt und zugleich ein Aufnahmeraum mit Befestigungsmöglichkeiten für das Schwenklager geschaffen werden. Das Schwenklager kann insbesondere mit einer Eingriffsmulde für eine Eingriffsnase am Gehäuse der Energieversorgungseinheit versehen sein, und es kann vorzugsweise aus einem Kunststoffelement mit integral angeformter Eingriffsmulde und Einschraublöchern an einer Unterseite des Kunststoffelementes bestehen.

Weiter vorzugsweise kann ein Kontaktstecker zur elektrischen Kontaktierung einer Energieversorgungseinheit an einer Deckflanke des Unterrohrs ausgebildet sein, wobei vorzugsweise die Deckflanke mit einem Durchgriff für einen Ladestecker für die Energieversorgungseinheit versehen ist, wobei weiter vorzugsweise dem Durchgriff ein an einer Oberseite des Unterrohrs angeordnetes, öffen- und schließbares Abdeckelement zugeordnet sein kann. Die Deckflanke besteht hierbei vorzugsweise aus dem Verbindungsabschnitt zwischen den beiden Hohlkammern. Das Abdeckelement kann Bestandteil einer am Unterrohr befestigten Deckkonsole sein, die gemäß einer vorteilhaften Ausgestaltung mit mehreren Einschraublöchern, vorzugsweise mit mehreren Paaren von Einschraublöchern für Anbauteile wie Flaschenhalter versehen ist. Ferner kann das Unterrohr mit wenigstens einem Sichtfenster für Anzeigeeinrichtungen am Gehäuse der Energieversorgungseinheit versehen sein.

Dem in der Aufnahmevertiefung angeordneten Riegel ist vorzugsweise eine rahmenseitig verankerte Schließeinrichtung zugeordnet, wobei die Schließeinrichtung vorteilhafterweise einen Schließnocken aufweist, der in Schließstellung eine Bewegung des Riegels verhindert. Der Riegel kann insbesondere einen von einer Oberseite des Unterrohrs bedienbaren Betätigungsarm aufweisen, und/oder der Riegel weist einen Betätigungsarm, den Riegelhaken und eine Lagerbohrung auf, wobei der Riegelhaken und der Betätigungsarm derart relativ zur Lagerbohrung am Riegel angeordnet sind, dass nach unten auf den Riegelhaken wirkende Gewichtskräfte den Betätigungsarm in Schließ- und Riegelstellung belasten. Eine entsprechende geometrische Anordnung sorgt dafür, dass die Gewichtskraft der Energieversorgungseinheit den Riegel in Schließstellung bewegt und damit ein unbeabsichtigtes Lösen der Energieversorgungseinheit verhindert. Der Riegel kann einen Armteil aufweisen, der mit einer Kröpfung zum Zusammenwirken mit einem Schließnocken an einer rahmenseitigen Schließeinrichtung versehen ist, wobei vorzugsweise der Armteil bezogen auf die Lagerbohrung winkelversetzt zum Riegelhaken angeordnet ist. Der Riegel kann, insbesondere am Ende eines Armteils und beabstandet vom Riegelhaken, auch mit einem Auswerferelement für die Energieversorgungseinheit, insbesondere mit einer Nase oder einem Nocken, versehen sein, um das Lösen und Herausschieben der Energieversorgungseinheit aus der Ausnahmevertiefung bei Betätigung des Riegels zu unterstützen. Bei dieser Ausgestaltung kann der Nocken der Schließeinrichtung auch mit der Unterseite des Armteils, vorzugsweise in einem Bereich zwischen Auswerferelement und Drehlager, zusammenwirken.

Die vorgenannte Aufgabe wird bei einem Fahrradrahmen mit einer Energieversorgungseinheit gelöst, indem das Gehäuse der Energieversorgungseinheit kastenförmig ausgebildet ist, wobei der Abstand der Querseiten kleiner ist als die Breite einer Aufnahmevertiefung im Unterrohr des Fahrradrahmens, wobei die Vorderseite des Gehäuses als Eingriffsnase zum Eingriff in eine ein Schwenklager für die Energieversorgungseinheit am Fahrradrahmen bildende Eingriffsmulde ausgebildet ist und wobei an der Deckseite des Gehäuses ein parallel zur Längsrichtung ausgerichteter Riegelzapfen zum Zusammenwirken mit einem kippbar am Fahrradrahmen angeordneten Riegel ausgebildet ist. Besonders vorteilhaft ist, wenn das Gehäuse an der Rückseite mit einer Stufe versehen ist, wobei der Riegelzapfen mit Abstand zur Oberseite der Stufe angeordnet ist, und vorzugsweise zwischen zwei an der Oberseite der Stufe ausgebildeten Haltenocken angeordnet ist. Das Gehäuse kann insbesondere mit einer separaten Ladebuchse an der Deckseite versehen sein, wodurch die Energieversorgungseinheit auch in Betriebslage in der Aufnahmevertiefung am Fahrradrahmen geladen werden kann. Der Ladestecker wird vorzugsweise durch eine Öffnung in der Deckflanke des Unterrohrs hindurch in die Ladebuchse eingesteckt.

Weitere Vorteile und Ausgestaltungen eines erfindungsgemäßen Fahrradrahmens, Elektrofahrrades bzw. einer Energieversorgungseinheit ergeben sich aus der nachfolgenden Beschreibung eines in der Zeichnung gezeigten bevorzugten Ausführungsbeispiels. In der Zeichnung zeigen:
- **Fig. 1**: schematisch stark vereinfacht einen erfindungsgemäßen Fahrradrahmen mit teilweise montierter Energieversorgungseinheit in Seitenansicht;
- **Fig. 2**: den Fahrradrahmen aus Fig. 1 bei demontierter Energieversorgungseinheit in Ansicht auf die Unterseite des Unterrohrs;
- **Fig. 3**: schematisch stark vereinfacht einen Vertikalschnitt durch das Unterrohr eines erfindungsgemäßen Fahrradrahmens sowie des Gehäuses einer Energieversorgungseinheit;
- **Fig. 4**: einen Längsschnitt durch das Unterrohr nebst angeschlossenem integrierten Elektromotor bei montierter Energieversorgungseinheit, teilweise aufgebrochen;
- **Fig. 5**: die Energieversorgungseinheit im Detail in Seitenansicht;
- **Fig. 6**: die Energieversorgungseinheit aus Fig. 5 in perspektivischer Ansicht auf die Rückseite;
- **Fig. 7**: die Energieversorgungseinheit aus Fig. 5 in perspektivischer Seitenansicht auf die Vorderseite mit der Eingriffsnase;
- **Fig. 8**: in einer Detailansicht ein Ausführungsbeispiel eines Riegels nebst schematisch dargestellter Schließeinrichtung sowie Lagerzapfen und Riegelzapfen in Seitenansicht; und
- **Fig. 9**: den Riegel und die Schließeinrichtung aus Figur 8 in perspektivischer Ansicht.

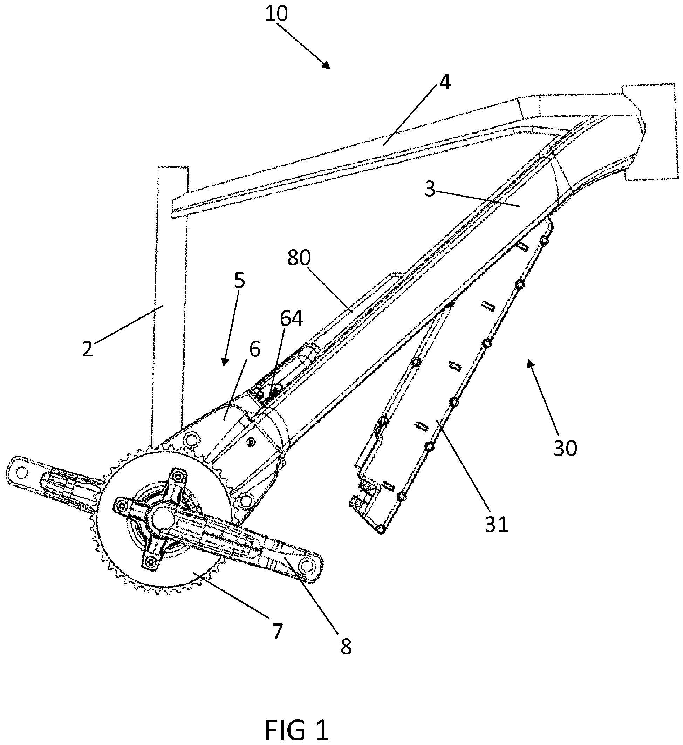

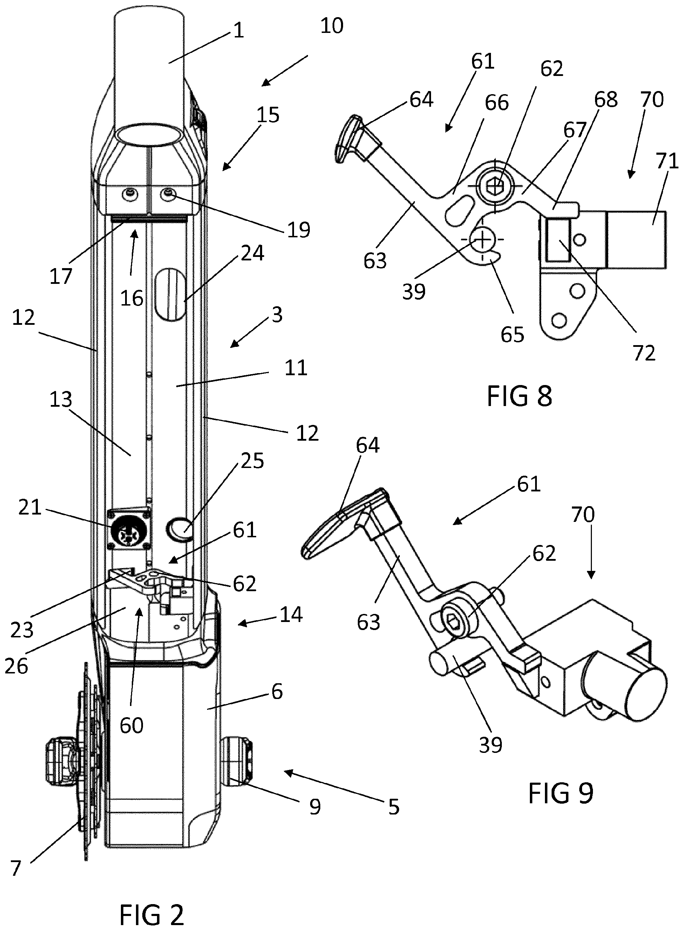

Die Figuren 1 und 2 zeigen einen Fahrradrahmen 10 von einem weiter nicht dargestellten Elektrofahrrad. Von dem Fahrradrahmen 10 ist nur der vordere Rahmenteil mit Lenkkopfrohr 1, Sattelrohr 2, Unterrohr 3 sowie Oberrohr 4 dargestellt, wobei Unterrohr 3 und Oberrohr 4 zusammen mit dem Lenkkopfrohr 1 einen vorderen Knotenpunkt bilden, wohingegen das Sattelrohr 2 und das Unterrohr 3 über einen in den Fahrradrahmen 10 als Mittelmotor integrierten Elektromotor 5, bzw. über dessen Gehäuse 6, miteinander verbunden sind, wodurch ein hinterer Knotenpunkt gebildet wird. Der in den Figuren 1 und 2 angedeutete Elektromotor 5 ist mit einem vorderen Antriebskettenblatt 7 über eine die Tretkurbeln 8 tragende Antriebsachse 9 verbunden. Auf den Aufbau des Elektromotors und dessen Kraftübertragung auf die Kette bzw. das Antriebskettenblatt kommt es für die Erfindung nicht an, weswegen keine weitere Beschreibung erfolgt. Die weiteren Bauteile eines Fahrrades wie Vorderradgabel, Lenker, Vorderrad, Hinterrad, Kettenstreben, Rahmenstreben, Sattel, Bremsen etc. sind zur Erleichterung der Erläuterung der Erfindung nicht dargestellt.

Bei dem erfindungsgemäßen Fahrradrahmen 10 wird eine in den Figuren insgesamt mit Bezugszeichen 30 bezeichnete Energieversorgungseinheit vollständig am bzw. versenkt im Unterrohr 3 lösbar befestigt, wobei, wie schon gut aus Figur 1 ersichtlich ist, die Energieversorgungseinheit 30 von unten in eine an der Unterseite des Unterrohrs 3 offene Aufnahmevertiefung 11 hineingeschwenkt werden kann.

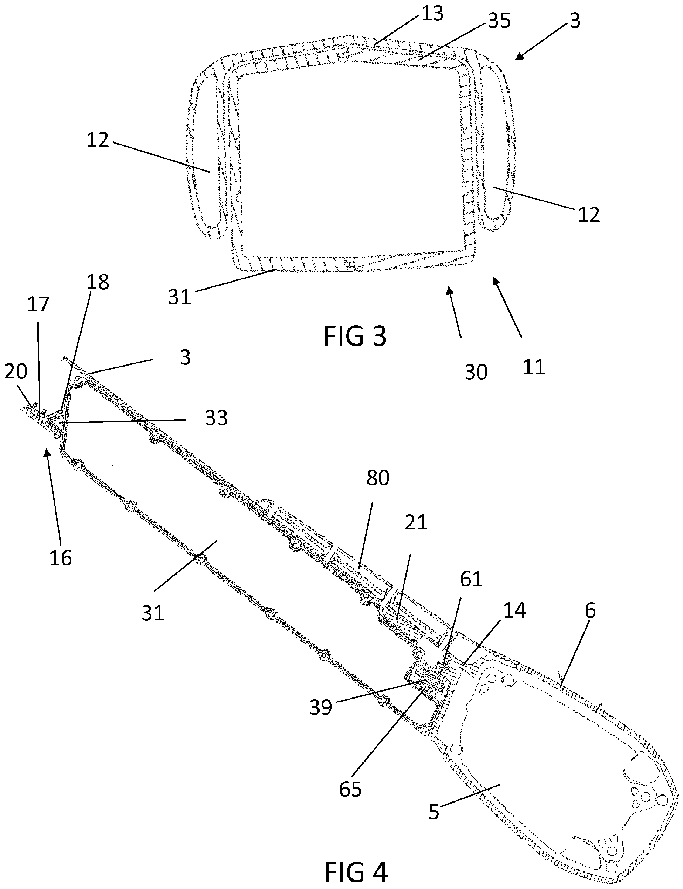

Das Unterrohr 3 besteht vorzugsweise aus einem Stranggussprofil aus Metall, und weist zu beiden Seiten der Aufnahmevertiefung 11, wie aus Figur 3 gut ersichtlich ist, jeweils eine integral angeformte Hohlkammer 12 auf, wobei die beiden Hohlkammern 12 über eine Deckflanke 13 miteinander verbunden sind, welche die Aufnahmevertiefung 11, in welche die Energieversorgungseinheit 30 mit ihrem Gehäuse 31 annähernd formschlüssig und vollständig im Montagezustand eintaucht, nach oben hin begrenzt. Der Hohlraum in den Hohlkammern 12 hat vorzugsweise eine Tiefe, die hier etwa dem vierfachen der Rohrdicke des Unterrohrs 3 bzw. dem vierfachen der Dicke der Deckflanke 13 entspricht.

Wie Fig. 2 gut erkennen lässt, erstreckt sich die Aufnahmevertiefung 11 annähernd über die gesamte Länge des Unterrohrs 3 zwischen der Anschlussstelle 14 des Unterrohrs 3 an einem Anschlussflansch 26 am Gehäuse 6 des Elektromotors 5 und einem Übergangsstück 15, welches am Lenkkopfrohr 1 angeschlossen, insbesondere angeschweißt ist. Die Aufnahmevertiefung 11 hat einen im Wesentlichen rechteckförmigen Querschnitt, der sich über die gesamte Länge des Unterrohrs 3 erstreckt und durch die Profilierung des Unterrohrs 3 zwischen Deckflanke 13 und Hohlkammern 12 vorgegeben ist. Im Innenraum der Aufnahmevertiefung 11 ist im Bereich des Übergangsstücks 15 ein Schwenklager 16 als vorderes Widerlager für die Energieversorgungseinheit angeordnet, welches im Detail nur in Figur 4 zu erkennen ist und welches mittels eines Kunststoffelementes 17 mit einer Eingriffsmulde 18 gebildet wird, wobei das Kunststoffelement 17 wiederum von unten durch Schraubenlöcher 19 in der Bodenwand des Übergangsstücks 15 hindurch mittels zugehöriger Schrauben 20 in der Aufnahmevertiefung 11 bzw. am Übergangsstück 15 befestigt ist. Zur Erhöhung der Steifigkeit des Fahrradrahmens 10 an der Stirnseite des Unterrohrs 3 ist das Übergangsstück 15 vorzugsweise mehrteilig ausgebildet, wie Figur 2 gut erkennen lässt.

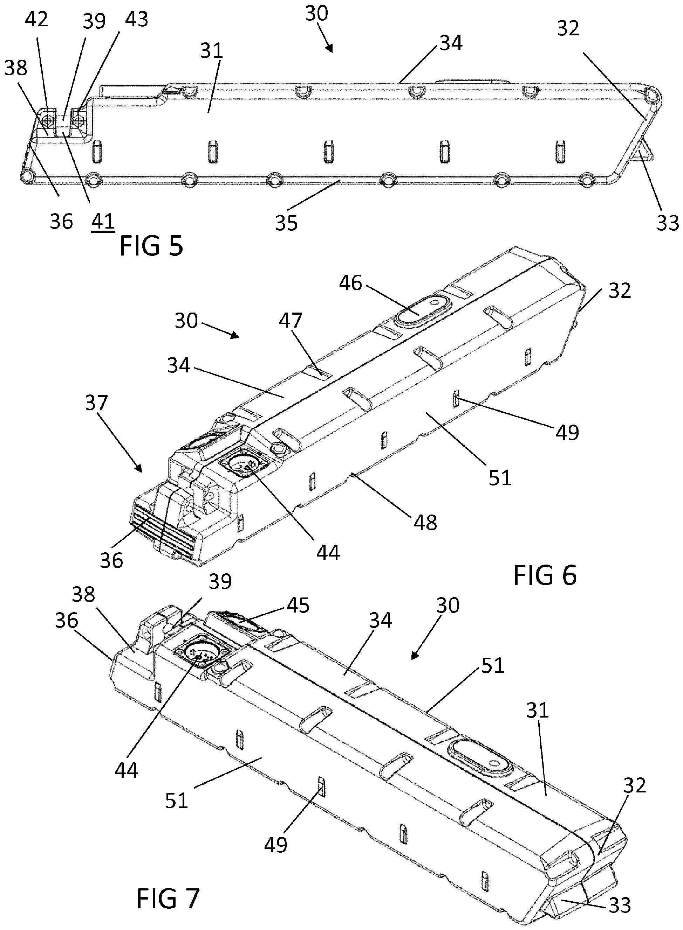

Das Gehäuse 31 der Energieversorgungseinheit 30, welches eine langgestreckte kastenförmige Grundform hat, weist an seiner Vorderseite 32, wie die Figuren 5 und 7 besonders gut erkennen lassen, eine im Querschnitt V-förmige Eingriffsnase 33 auf, die über die Vorderseite 32 vorkragt und sich über quasi die gesamte Breite des Gehäuses 31 der Energieversorgungseinheit 30 mit konstantem Querschnitt erstreckt. Die Vorderseite 32 selbst verläuft in einem Winkel von etwa 30° nach hinten und unten ausgehend von der Deckseite 34 des Gehäuses 31. Die Eingriffsnase 33 liegt hierbei zur Unterseite 35 des Gehäuses 31 hin außermittig versetzt. Die Oberseite 34 des Gehäuses 31 ist entsprechend der Formgebung der Deckflanke 13 des Unterrohrs 3 leicht V-förmig abgewinkelt, wobei das in den Zeichnungen gezeigte Gehäuse 31 aus zwei Gehäusehälften besteht, deren Trenn- und Fügeebene in der Mittellängsebene des Gehäuses 31 liegt, um im Innern des Gehäuses 30 weiter nicht dargestellter Akkuzellen und Elektronik unterzubringen. Die Unterseite 35 ist weitestgehend eben, wobei durch Rippen im Gehäuse 31 die Stabilität des Gehäuses 31 und durch Vorsprünge 49 an den Querseiten 51 des Gehäuses 30 die Lagestabilität der Energieversorgungseinheit 30 im Montagezustand in der Aufnahmevertiefung im Unterrohr erhöht werden kann.

Die Rückseite 36 des Gehäuses 31 läuft annähernd mit dem selben Schrägenwinkel wie die Vorderseite 32, allerdings ist das Gehäuse 31 im Bereich der Rückseite 36 mit einer Stufe 37 versehen, deren Oberseite 38 um einige Zentimeter tiefer liegt als die Deckseite 34 des Gehäuses 31. Die Stufe 37 dient dazu, unmittelbar am Gehäuse 31 einen Riegelzapfen 39 anzuordnen, der zwischen der Deckseite 34 und der Oberseite 38 positioniert ist und unterhalb dessen ein Freiraum 41 gegenüber der Oberseite 38 ausgebildet ist. An der Oberseite 38 sind hierzu zwei voneinander beanstandete kräftige Haltenocken 42 und 43 ausgebildet, in die der Riegelzapfen 39 jeweils einfasst. Der Riegelzapfen 39 verläuft parallel und fluchtend zur Längsmittelebene des Gehäuses 31 und damit auch parallel zur Längsachse der Aufnahmevertiefung im Unterrohr. Die Teilungsebene des Gehäuses 31 bildet zugleich die Teilungsebene für die Haltenocken 42, 43, wodurch der Riegelzapfen 39 relativ einfach positioniert und zwischen den Haltenocken 42, 43 bei der Montage des Gehäuses 31 arretiert werden kann.

Angrenzend an die Stufe 37 sind am Gehäuse 31 in der einen Gehäusehälfte eine Anschlussbuchse 44 und in der anderen Gehäusehälfte eine Ladebuchse 45 angeordnet. Die Akkuzellen der Energieversorgungseinheit 30 können daher über die Ladebuchse 45 auch dann geladen werden, wenn die Energieversorgungseinheit in der Aufnahmevertiefung 11 im Unterrohr 3 des Fahrradrahmens 10 verankert ist. Die Anschlussbuchse 44 liegt annähernd horizontal, so dass sie beim Hochschwenken der Energieversorgungseinheit 30 in die Aufnahmevertiefung am Unterrohr hinein ausschließlich durch diese Schwenkbewegung mit einem entsprechenden Anschlussstecker, der in der Aufnahmevertiefung angeordnet ist, wie noch erläutert werden wird, elektrisch verbunden wird. An der Deckflanke 34 des Gehäuses 31 ist ferner noch ein Anzeigenfeld 46 ausgebildet, an welchem beispielsweise über LED-Lämpchen, oder aber auch über eine digitale Anzeige, der aktuelle Ladezustand und andere Zustände der Energieversorgungseinheit 30 bzw. von deren Akkuzellen angezeigt werden können.

Es wird nun wieder Bezug genommen auf die Fig. 2, welche eine Ansicht in den Innenraum der Aufnahmevertiefung 11 bildet. Das vordere Schwenklager 16 mit seinem die Eingriffsmulde aufweisenden Kunststoffelement 17 ist nahe des Lenkkopfrohrs 1 sowie der beiden das Übergangsstück 15 bildenden Teilelemente zu erkennen. Entsprechend der Gestaltung der Energieversorgungseinheit ist im hinteren, dem Motor 5 zugewandten Bereich der Aufnahmevertiefung 11 zum Einen an der Unterseite der Deckflanke 13 des Unterrohrs 3 ein Anschlussstecker 21 befestigt, der über nicht gezeigte Anschlusskabel eine Energieversorgung des Elektromotors 5 gewährleistet, und ferner ist zur Verriegelung der Energieversorgungseinheit (30, Fig. 5-7) im hinteren Bereich, hier am Anschlussflansch 26, ein Riegel 61 kippbar um einen Drehzapfen 62 angelenkt, der ein zweites Widerlager 60 für die Energieversorgungseinheit (30, Fig. 1) bildet.

Der Riegel 61 zusammen mit dem Drehzapfen 62 sowie einer rahmenseitigen Schließeinrichtung 70 ist aus Gründen der besseren Darstellung im Detail in den Fig. 8 und 9 losgelöst vom Fahrradrahmen dargestellt. Von der Energieversorgungseinheit ist in den Fig. 8 und 9 zur Verdeutlichung der Funktionsweise der Riegelzapfen 39 gezeigt und die Fig. 2, 8 und 9 zeigen den Riegel 61 jeweils in Schließstellung, in welcher die Rückseite der Energieversorgungseinheit bewegungsfest innerhalb der Aufnahmevertiefung (11, Fig. 2) gehalten wird. Der Riegel 61 weist einen Betätigungsarm 63 auf, der im Montagezustand einen Schlitz (23, Fig. 2) in der Deckflanke (13, Fig. 2) des Unterrohrs durchgreift und an der Oberseite des Unterrohrs mit einem Griffteil 64 frei zugänglich ist. Das andere Ende des Betätigungsarms 63 bildet einen mit einem offenen Maul versehenen Riegelhaken 65, der in der Riegelstellung mit seinem Maul den Riegelzapfen 39 an der Energieversorgungseinheit, wie in den Fig. 8 und 9 gezeigt, unterfasst. Der Drehzapfen 62 ist an einem Quersteg 66 des Riegels 61 ausgebildet, der am Betätigungsarm 63, angrenzend an den Riegelhaken 65, entspringt und etwa rechtwinklig zum Betätigungsarm 63 verläuft, wobei der Quersteg 66 einen mehrfach größeren Abstand vom Griffteil 64 aufweist als vom Riegelhaken 65. Die Hebelarme und die Positionen sind derart gewählt, dass eine über den Riegelzapfen 39 auf den Riegelhaken 65 ausgeübte Kraft, normalerweise hervorgerufen durch das Eigengewicht der Energieversorgungseinheit, aufgrund der nach unten offenen Aufnahmevertiefung im Unterrohr und aufgrund der freien Schwenkbarkeit der Energieversorgungseinheit an der der Eingriffsnase bzw. dem vorderen Schwenklager 16 gegenüberliegenden Rückseite der Energieversorgungseinheit, den Betätigungsarm 63 in Schließstellung bewegt bzw. drückt, mithin ein unbeabsichtigtes Öffnen des Riegels 61 verhindert. Ausschließlich eine manuelles Betätigen des Betätigungsarms 63 über das Griffstück 64 ermöglicht, dass das Maul des Riegelhakens 65 den Riegelzapfen 39 nach unten hin nicht mehr unterfasst, weswegen nur bei einer solchen, nicht dargestellten Stellung des Riegels 61 die Energieversorgungseinheit aus der Aufnahmevertiefung im Unterrohr nach unten herausgeschwenkt bzw. entnommen werden könnte.

Dem Riegel 61 ist ferner noch eine Schließeinrichtung 70 insbesondere als Diebstahlschutz für die Energieversorgungseinheit zugeordnet. Die Schließeinrichtung 70 ist in den Fahrradrahmen integriert und im Fahrradrahmen verankert. Die Schließeinrichtung 70 ist mit einem beispielsweise mittels eines Schlüssels betätigbaren Schlosskörper 71 versehen, der in einer geeigneten Bohrung vorzugsweise im Anschlussflansch 26 des Fahrradrahmens zwischen Motor 5 und Unterrohr 3 sitzt, und der einen Schließnocken 72 aufweist, wobei dieser Schließnocken 72 in der Schließstellung des Schlosskörpers 71 der Schließeinrichtung, wie in den Fig. 8 und 9 gezeigt, eine Bewegung des Riegels 61 in Öffnungsrichtung, also in diejenige Stellung, bei welcher der Riegelzapfen 39 an der Energieversorgungseinheit nicht unterfasst wird, blockiert und verhindert. Zum Zusammenwirken mit dem Schließnocken 72 ist am Riegel 61 in Verlängerung des Querschenkels 66 ein dritter Armteil 67 mit einer Kröpfung 68 ausgebildet, wobei diese Kröpfung im Schließzustand des Schließnockens 72 formschlüssig an diesem anliegt und eine Bewegung des Riegels 61 verhindert. Nur durch Wegdrehen oder Zurückziehen des Schließnockens 72 kommt die Kröpfung 68 frei und der Riegel 61 kann aus der dargestellten Stellung gekippt werden.

Fig. 2 lässt ferner noch erkennen, dass die Deckflanke 13 des Unterrohrs 3 zum Einen mit einem Sichtfenster 24 versehen ist, durch welches das Anzeigefeld (46, Fig. 6) an der Energieversorgungseinheit durch die Deckflanke des Unterrohrs 3 hindurch sichtbar ist, und ferner mit einer hier kreisrunden Öffnung 25 versehen, durch welche ein Ladestecker bei montierter Energieversorgungseinheit in die zugehörige Ladebuchse (45, Fig. 7) der Energieversorgungseinheit eingesteckt werden kann. Die Öffnung 25 bildet einen Durchgriff für den nicht dargestellten Ladestecker. Um diesen Durchbruch bzw. die Öffnung 25 abzudecken, ist im gezeigten Ausführungsbeispiel an der Oberseite der Deckflanke des Unterrohrs 3, wie die Fig. 1 und 4 erkennen lassen, eine Deckkonsole 80 vorzugsweise aus Kunststoff befestigt, die unter anderem mit einer öffenbaren Abdeckklappe (nicht gezeigt) für den Durchgriff 25 versehen ist und ferner mehrere, vorzugsweise paarweise angeordnete Einschraublöcher aufweisen kann, um auch an dem Unterrohr Zubehör wie beispielsweise eine Trinkflasche montieren zu können.

Für den Fachmann ergeben sich aus der vorhergehenden Beschreibung zahlreiche Modifikationen. Die Erfindung wird jedoch allein durch die anhängigen Ansprüche definiert. Insbesondere für die Formgebung des Gehäuses der Energieversorgungseinheit an der Unterseite und an den Querseiten besteht ausreichend Gestaltungsspielraum. Auch der Riegel und das vordere Schwenklager könnten in ihrer Formgebung vom gezeigten Ausführungsbeispiel abweichen. Beim Riegel könnte beispielsweise auch eine Kröpfung zur Erzeugung einer gesonderten Anlagefläche für den Schließnocken der Schließeinrichtung entfallen und der Schließnocken kann mit einer Unterseite eines Armteils des Riegels zusammenwirken. Anstelle der Kröpfung könnte dann am Ende eines Armteils des Riegels eine Nase oder ein Vorsprung als Auswerferelement vorgesehen werden, um bei der Betätigung des Riegels nicht nur das Energieversorgungselement für eine Verschwenken nach unten (passiv) freizugeben sondern zugleich auch diese Bewegung durch eine Schiebebewegung des Auswerferelements gegen das Gehäuse der Energieversorgungseinheit (aktiv) zu unterstützen. Das Auswerferelement kann hierzu beispielsweise als Nase nach unten am Ende des Armteils vorkragen und damit quasi dem offenen Maul des Riegelhaken mit Abstand gegenüberliegen. Der Nocken an der Schließeinrichtung kann dann an der Unterseite des Armteils zwischen Riegelhaken und Auswerferelement anliegen, wenn sich der Riegel und die Schließeinrichtung in der Schließstellung befinden. Hierzu kann ein Armteil mit ebener Unterseite vorgesehen sein, wobei das Drehlager im Zentrum dieses Armteils ausgebildet ist.

## Patentansprüche

1. Fahrradrahmen (10) für Elektrofahrräder, mit mehreren miteinander verbundenen Rahmenstreben, die zumindest ein Unterrohr (3), ein Sattelrohr (2) und ein Lenkkopfrohr (1) des Fahrradrahmens (10) bilden, mit einem Elektromotor (5) und mit einer Einrichtung zur lösbaren Befestigung einer Energieversorgungseinheit (30) für den Elektromotor (5) am Unterrohr (3) des Fahrradrahmens (10), wobei die Befestigungseinrichtung für die Energieversorgungseinheit (30) ein Schwenklager (16) für die Energieversorgungseinheit (30) als erstes Widerlager und ein zweites Widerlager (60) aufweist, wobei die das Unterrohr (3) des Fahrradrahmens bildende Rahmenstrebe eine nach unten offene Aufnahmevertiefung (11) für die Energieversorgungseinheit (30) aufweist, **dadurch gekennzeichnet, dass** zu beiden Seiten der Aufnahmevertiefung (11) integral in der Rahmenstrebe (3) angeformte Hohlkammern (12) gebildet sind, die über eine Deckflanke (13) miteinander verbunden sind.

2. Fahrradrahmen (10) nach Anspruch 1, **dadurch gekennzeichnet, dass** das zweite Widerlager (60) einen in der Aufnahmevertiefung (11) kippbar gelagerten Riegel (61) aufweist, der vorzugsweise einen von einer Oberseite des Unterrohrs (3) bedienbaren Betätigungsarm (63) aufweist und/oder der vorzugsweise mit einem Riegelhaken (65) zum lösbaren Unterfassen eines Riegelzapfens (39) an der Energieversorgungseinheit (30) in einer Riegelstellung des Riegels (61) versehen ist.

3. Fahrradrahmen (10) nach Anspruch 1 oder 2, **gekennzeichnet durch** einen in den Rahmen zwischen Sattelrohr (2) und Unterrohr (3) integrierten Elektromotor (5), wobei das Unterrohr (3) mittels eines Anschlussflanschs (26) am Gehäuse (6) des Elektromotors (5) angeschlossen ist.

4. Fahrradrahmen : (10) nach Anspruch 1, 2 oder 3, **dadurch gekennzeichnet, dass** zwischen Unterrohr (3) und Lenkkopfrohr (1) ein vorzugsweise mehrteiliges Übergangsstück (15) angeordnet ist, wobei das Schwenklager (16) vorzugsweise im Übergangsstück (15) angeordnet, insbesondere lösbar befestigt ist.

5. Fahrradrahmen (10) nach einem der vorhergehenden Ansprüche, **dadurch gekennzeichnet, dass** das Schwenklager (16) mit einer Eingriffsmulde (18) für eine Eingriffsnase (33) am Gehäuse (31) der Energieversorgungseinheit (30) versehen ist, und vorzugsweise aus einem Kunststoffelement (17) mit integral angeformter Eingriffsmulde (18) und Einschraublöchern an einer Unterseite des Kunststoffelementes (17) besteht.

6. Fahrradrahmen (10) nach einem der vorhergehenden Ansprüche, **dadurch gekennzeichnet, dass** ein Kontaktstecker (21) zur elektrischen Kontaktierung einer Energieversorgungseinheit (30) an einer Deckflanke (13) des Unterrohrs (3) angeordnet ist, wobei vorzugsweise die Deckflanke (13) mit einem Durchgriff (25) für einen Ladestecker für die Energieversorgungseinheit (30) versehen ist, wobei vorzugsweise dem Durchgriff (25) eine an einer Oberseite des Unterrohrs (3) angeordnete, öffen- und schließbares Abdeckklappe zugeordnet ist.

7. Fahrradrahmen (10) nach Anspruch 6, **dadurch gekennzeichnet, dass** die Abdeckklappe Bestandteil einer am Unterrohr (3) befestigten Decckonsole (80) ist, die mit mehreren Einschraublöchern, vorzugsweise mit mehreren Paaren von Einschraublöchern für Anbauteile wie Flaschenhalter, versehen ist.

8. Fahrradrahmen (10) nach einem der vorhergehenden Ansprüche, **dadurch gekennzeichnet, dass** das Unterrohr (3) mit wenigstens einem Sichtfenster (46) für Anzeigeeinrichtungen am Gehäuse (31) der Energieversorgungseinheit (30) versehen ist.

9. Fahrradrahmen (10) nach einem der vorhergehenden Ansprüche, **dadurch gekennzeichnet, dass** dem Riegel (61) eine rahmenseitig verankerte Schließeinrichtung (70) zugeordnet ist, wobei die Schließeinrichtung vorzugsweise einen Schließnocken (72) aufweist, der in Schließstellung eine Bewegung des Riegels (61) verhindert.

10. Fahrradrahmen (10) nach Anspruch 2, **dadurch gekennzeichnet, dass** der Riegel (61) einen von einer Oberseite des Unterrohrs (3) bedienbaren Betätigungsarm (63) aufweist, wobei vorzugsweise der Betätigungsarm (63) einen Schlitz (23) in der Deckflanke (13) des Unterrohrs (3) durchgreift, und/oder dass der Riegel (61) einen Betätigungsarm (63), einen Riegelhaken (65) und ein Drehlager aufweist, wobei der Riegelhaken (65) und der Betätigungsarm (63) derart relativ zum Drehlager am Riegel (61) angeordnet sind, dass nach unten auf den Riegelhaken (65) wirkende Gewichtskräfte den Betätigungsarm (63) in Schließ- und Riegelstellung belasten.

11. Fahrradrahmen (10) nach Anspruch 10, **dadurch gekennzeichnet, dass** der Riegel (61) einen Armteil (67) hat, der mit einer Kröpfung (68) zum Zusammenwirken mit einem Schließnocken (72) an einer rahmenseitigen Schließeinrichtung (70) versehen ist, wobei vorzugsweise der Armteil (67) bezogen auf das Drehlager winkelversetzt zum Riegelhaken (65) angeordnet ist, und/oder dass der Betätigungsarm (63) mit einem Auswerferelement für die Energieversorgungseinheit (30) versehen ist, wobei vorzugsweise das Auswerferelement am Ende eines Armteils (67) des Riegels (61) und beabstandet vom Riegelhaken (65) ausgebildet ist.

12. Fahrradrahmen (10) nach einem der Ansprüche 1 bis 11, mit einer in der Aufnahmevertiefung (11) am Unterrohr (3) angeordneten Energieversorgungseinheit (30), die ein Gehäuse (31) mit Unterseite (35), Rückseite (36), Deckseite (34), Vorderseite (32) und Querseiten (51), eine aufladbaren Akkueinheit in einem Gehäuseinnenraum und eine Anschlussbuchse (44) für die Akkueinheit aufweist, **dadurch gekennzeichnet, dass** das Gehäuse (31) kastenförmig ausgebildet ist, wobei der Abstand der Querseiten (51) kleiner ist als die Breite der nach unten offenen Aufnahmevertiefung (11) im Unterrohr (3) des Fahrradrahmens (10), wobei die Vorderseite (32) des Gehäuses (31) mit einer Eingriffsnase (33) zum Eingriff in eine ein Schwenklager (16) für die Energieversorgungseinheit (30) am Fahrradrahmen (10) bildende Eingriffsmulde (18) versehen ist, wobei die Energieversorgungseinheit (30) von unten in die Aufnahmevertiefung (11) einschwenkbar ist und an der Deckseite (34) des Gehäuses (31) ein parallel zur Längsrichtung ausgerichteter Riegelzapfen (39) zum Zusammenwirken mit einem kippbar am Fahrradrahmen (10) angeordneten Riegel (61) ausgebildet ist.

13. Fahrradrahmen (10) nach Anspruch 12, **dadurch gekennzeichnet, dass** das Gehäuse (31) der Energieversorgungseinheit (30) an der Rückseite (36) mit einer Stufe (37) versehen ist, wobei der Riegelzapfen (39) mit Abstand zur Oberseite (38) der Stufe (37) angeordnet ist, und vorzugsweise zwischen zwei an der Oberseite (38) der Stufe (37) ausgebildeten Haltenocken (42, 43) angeordnet ist.

14. Fahrradrahmen (10) nach Anspruch 12 oder 13, **dadurch gekennzeichnet, dass** das Gehäuse (31) der Energieversorgungseinheit (30) mit einer separaten Ladebuchse (45) an der Deckseite (34) versehen ist.

15. Elektrofahrrad mit einem Fahrradrahmen (10), mit einem in den Fahrradrahmen (10) integrierten Elektromotor (5) und mit einer lösbar am Fahrradrahmen (10) befestigbaren oder befestigten Energieversorgungseinheit (30) für den Elektromotor (5), **dadurch gekennzeichnet, dass** der Fahrradrahmen (10) gemäß einem der Ansprüche 1 bis 11 ausgebildet ist und/oder der Fahrradrahmen (10) mit Energieversorgungeinheit (30) gemäß einem der Ansprüche 12 bis 14 ausgebildet ist.

## Claims

1. Bicycle frame (10) for electric bicycles, with several frame struts connected with one another which form at least one down tube (3), a saddle tube (2) and a steering head tube (1) of the bicycle frame (10), with an electric motor (5) and with a device for the releasable fastening of an energy supply unit (30) for the electric motor (5) on the down tube (3) of the bicycle frame (10), wherein the fastening device for the energy supply unit (30) has a pivot bearing (16) for the energy supply unit (30) as first counter bearing and a second counter bearing (60), wherein
the frame strut forming the down tube (3) of the bicycle frame has a downwardly open receiving cavity (11) for the energy supply unit (30),
**characterised in that** at both sides of the receiving cavity (11) hollow chambers (12) are formed moulded integrally in the frame strut (3) which are connected with one another via a covering flank (13).

2. Bicycle frame (10) according to claim 1, **characterised in that** the second counter bearing (60) has a bar (61) tiltably mounted in the receiving cavity (11), which bar has preferably an actuating arm (63) which can be operated from a top side of the down tube (3) and/or is preferably equipped with a latching hook (65) for the releasable under-gripping of a locking pin (39) on the energy supply unit (30) in a locked position of the bar (61).

3. Bicycle frame (10) according to claim 1 or 2, **characterised by** an electric motor (5) integrated into the frame between saddle tube (2) and down tube (3), wherein the down tube (3) is connected by means of a connecting flange (26) on the housing (6) of the electric motor (5).

4. Bicycle frame (10) according to claim 1, 2 or 3, **characterised in that** between down tube (3) and steering head tube (1) is disposed a preferably multi-part transition piece (15), wherein the pivot bearing (16) is disposed preferably in the transition piece (15), is in particular releasably fastened.

5. Bicycle frame (10) according to any of the preceding claims, **characterised in that** the pivot bearing (16) is equipped with an engagement indention (18) for an engagement lug (33) on the housing (31) of the energy supply unit (30), and consists preferably of a plastic element (17) with integrally moulded engagement recess (18) and screw-in holes on a bottom side of the plastic element (17).

6. Bicycle frame (10) according to any of the preceding claims, **characterised in that** a contact plug (21) for the electrical contacting of an electrical supply unit (30) is disposed on a covering flank (13) of the down tube (3), wherein the covering flank (13) is preferably equipped with a through-passage (25) for a charging plug for the energy supply unit (30), wherein preferably an openable and closable cover flap, disposed on a top side of the down tube, is assigned to the through passage (25).

7. Bicycle frame (10) according to claim 6, **characterised in that** the cover flap is a component of a cover panel (80) fastened on the down tube (3), which cover panel is equipped with several screw-in holes, preferably with several pairs of screw-in holes for add-on parts such as bottle holder.

8. Bicycle frame (10) according to any of the preceding claims, **characterised in that** the down tube (3) is equipped with at least one viewing window (46) for display devices on the housing (31) of the energy supply unit (30).

9. Bicycle frame (10) according to any of the preceding claims, **characterised in that** a closing device (70) anchored on the frame side is assigned to the bar (61), wherein the closing device has preferably one closing cam (72) which in a closed position prevents a movement of the bar (61).

10. Bicycle frame (10) according to claim 2, **characterised in that** the bar (61) has an actuating arm (63) which can be operated from a top side of the down tube (3),
wherein preferably the actuating arm (63) engages through a slot (23) in the covering flank (13) of the down tube (3), and/or
that the bar (61) has an actuating arm (63), a latching hook (65) and a pivot bearing, wherein the latching hook (65) and the actuating arm (63) are disposed relatively to the pivot bearing on the bar (61) such that weight forces acting downwards onto the latching hook (65) load the actuating arm (63) in closed position and locked position.

11. Bicycle frame (10) according to claim 10, **characterised in that**
the bar (61) has an arm part (67) which is equipped with a bent portion (68) to interact with a closing cam (72) on a closing device (70) on the frame side, wherein preferably the arm part (67) is disposed with respect to the pivot bearing angularly offset to the latching hook (65), and/or that the actuating arm (63) is equipped with an ejector element for the energy supply unit (30), wherein preferably the ejector element is formed at the end of an arm part (67) of the bar (61) and at a distance from the latching hook (65).

12. Bicycle frame (10) according to any of claims 1 to 11, with an energy supply unit (30) disposed in the receiving cavity (11) on the down tube (3), which energy supply unit has a housing (31) with bottom side (35), back side (36), cover side (34), front side (32) and lateral sides (51), a chargeable battery unit in a housing inner space and a connecting socket (44) for the battery unit,
**characterised in that** the housing (31) is in the form of a box, wherein the spacing of the lateral sides (51) is smaller than the breadth of the downwardly open receiving cavity (11) in the down tube (3) of the bicycle frame (10), wherein the front side (32) of the housing (31) is equipped with an engagement lug (33) for engaging in an engagement recess (18) forming a pivot bearing (16) for the energy supply unit (30) on the bicycle frame (10), wherein the energy supply unit (30) can be pivoted from below into the receiving cavity (11) and on the cover side (34) of the housing (31) is formed a locking pin (39) aligned parallel to the longitudinal direction for interaction with a bar (61) disposed tiltably on the bicycle frame (10).

13. Bicycle frame (10) according to claim 12, **characterised in that**
the housing (31) of the energy supply unit (30) is equipped on the back side (36) with a step (37), wherein the locking pin (39) is disposed at a distance from the top side (38) of the step (37) and is preferably disposed between two holding cams (42, 43) formed on the top side (38) of the step (37).

14. Bicycle frame (10) according to claim 12 or 13, **characterised in that** the housing (31) of the energy supply unit (30) is equipped with a separate charging socket (45) on the cover side (34).

15. Electric bicycle with a bicycle frame (10), with an electric motor (5) integrated in the bicycle frame (10) and with an energy supply unit (30) for the electric motor (5) fastened or able to be fastened releasably on the bicycle frame (10), **characterised in that**
the bicycle frame (10) is constructed according to any of claims 1 to 11 and/or the bicycle frame (10) is constructed with an energy supply unit (30) according to any of claims 12 to 14.

## Revendications

1. Cadre de vélo (10) pour vélos électriques, avec plusieurs entretoises de cadre reliées les unes aux autres, qui forment au moins un tube diagonal (3), un tube de selle (2) et un tube de direction (1) du cadre de vélo (10), avec un moteur électrique (5) et avec un appareil pour la fixation amovible d'une unité d'alimentation en énergie (30) pour le moteur électrique (5) au niveau du tube diagonal (3) du cadre de vélo (10), dans lequel l'appareil de fixation pour l'unité d'alimentation en énergie (30) présente un palier de pivotement (16) pour l'unité d'alimentation en énergie (30) en tant que première butée et une deuxième butée (60), dans lequel l'entretoise de cadre formant le tube diagonal (3) du cadre de vélo présente un évidement de réception ouvert vers le bas (11) pour l'unité d'alimentation en énergie (30), **caractérisé en ce que** des chambres creuses (12) formées d'un seul tenant dans l'entretoise de cadre (3), qui sont reliées les unes aux autres par le biais d'un flanc de recouvrement (13), sont formées des deux côtés de l'évidement de réception (11).

2. Cadre de vélo (10) selon la revendication 1, **caractérisé en ce que** la deuxième butée (60) présente un verrou (61) logé de manière basculante dans l'évidement de réception (11), qui présente de préférence un bras d'actionnement (63) pouvant être commandé par un côté supérieur du tube diagonal (3) et/ou qui est doté de préférence d'un crochet de verrouillage (65) pour la saisie amovible de l'embase d'un tenon de verrouillage (39) au niveau de l'unité d'alimentation en énergie (30) dans une position de verrouillage du verrou (61).

3. Cadre de vélo (10) selon la revendication 1 ou 2, **caractérisé par** un moteur électrique (5) intégré dans le cadre entre le tube de selle (2) et le tube diagonal (3), dans lequel le tube diagonal (3) est raccordé au moyen d'une bride de raccordement (26) au niveau du boîtier (6) du moteur électrique (5).

4. Cadre de vélo (10) selon la revendication 1, 2 ou 3, **caractérisé en ce qu'une** pièce de transition (15) de préférence à plusieurs parties est agencée entre le tube diagonal (3) et le tube de direction (1), dans lequel le palier de pivotement (16) est agencé, en particulier fixé de manière amovible, de préférence dans la pièce de transition (15).

5. Cadre de vélo (10) selon l'une quelconque des revendications précédentes, **caractérisé en ce que** le palier de pivotement (16) est doté d'une cavité de prise (18) pour une patte de prise (33) au niveau du boîtier (31) de l'unité d'alimentation en énergie (30), et se compose de préférence d'un élément plastique (17) avec cavité de prise (18) formée d'un seul tenant et trous de vissage au niveau d'un côté inférieur de l'élément en plastique (17).

6. Cadre de vélo (10) selon l'une quelconque des revendications précédentes, **caractérisé en ce qu'**une fiche de contact (21) est agencée pour le contact électrique d'une unité d'alimentation en énergie (30) au niveau d'un flanc de recouvrement (13) du tube diagonal (3), dans lequel de préférence le flanc de recouvrement (13) est doté d'un passage (25) pour une fiche de charge pour l'unité d'alimentation en énergie (30), dans lequel un clapet de recouvrement pouvant être ouvert et fermé, agencé au niveau d'un côté supérieur du tube diagonal (3) est associé de préférence au passage (25).

7. Cadre de vélo (10) selon la revendication 6, **caractérisé en ce que** le clapet de recouvrement fait partie d'une console de recouvrement (80) fixée au niveau du tube diagonal (3), qui est dotée de plusieurs trous de vissage, de préférence de plusieurs paires de trous de vissage pour des pièces rapportées telles qu'un porte-bouteille.

8. Cadre de vélo (10) selon l'une quelconque des revendications précédentes, **caractérisé en ce que** le tube diagonal (3) est doté d'au moins un regard (46) pour des appareils d'affichage au niveau du boîtier (31) de l'unité d'alimentation en énergie (30).

9. Cadre de vélo (10) selon l'une quelconque des revendications précédentes, **caractérisé en ce qu'**un appareil de fermeture (70) ancré côté cadre est associé au verrou (61), dans lequel l'appareil de fermeture présente de préférence une came de fermeture (72), qui dans la position de fermeture, empêche un déplacement du verrou (61).

10. Cadre de vélo (10) selon la revendication 2, **caractérisé en ce que** le verrou (61) présente un bras d'actionnement (63) pouvant être commandé par un côté supérieur du tube diagonal (3), dans lequel de préférence le bras d'actionnement (63) traverse une fente (23) dans le flanc de recouvrement (13) du tube diagonal (3), et/ou que le verrou (61) présente un bras d'actionnement (63), un crochet de verrouillage (65) et un palier rotatif, dans lequel le crochet de verrouillage (65) et le bras d'actionnement (63) sont agencés l'un par rapport à l'autre par rapport au palier rotatif au niveau du verrou (61) de sorte que des poids agissant vers le bas sur le crochet de verrouillage (65) sollicitent le bras d'actionnement (63) dans la position de fermeture et de verrouillage.

11. Cadre de vélo (10) selon la revendication 10, **caractérisé en ce que** le verrou (61) a une partie bras (67), qui est dotée d'un coude (68) pour la coopération avec une came de fermeture (72) au niveau d'un appareil de fermeture côté cadre (70), dans lequel de préférence la partie bras (67) est agencée par rapport au palier rotatif en décalage angulaire par rapport au crochet de verrouillage (65), et/ou que le bras d'actionnement (63) est doté d'un élément d'éjection pour l'unité d'alimentation en énergie (30), dans lequel de préférence l'élément d'éjection est réalisé à l'extrémité d'une partie bras (67) du verrou (61) et espacé du crochet de verrouillage (65).

12. Cadre de vélo (10) selon l'une quelconque des revendications 1 à 11, avec une unité d'alimentation en énergie (30) agencée dans l'évidement de réception (11) au niveau du tube diagonal (3), qui présente un boîtier (31) avec un côté inférieur (35), un côté arrière (36), un côté de recouvrement (34), un côté avant (32) et des côtés transversaux (51), une unité de batterie rechargeable dans un espace intérieur de boîtier et une douille de raccordement (44) pour l'unité de batterie, **caractérisé en ce que** le boîtier (31) est réalisé en forme de caisse, dans lequel la distance des côtés transversaux (51) est inférieure à la largeur de l'évidement de réception ouvert vers le bas (11) dans le tube diagonal (3) du cadre de vélo (10), dans lequel le côté avant (32) du boîtier (31) est doté d'une patte de prise (33) pour la mise en prise dans une cavité de prise (18) formant un palier de pivotement (16) pour l'unité d'alimentation en énergie (30) au niveau du cadre de vélo (10), dans lequel l'unité d'alimentation en énergie (30) peut être pivotée par le bas dans l'évidement de réception (11) et un tenon de verrouillage (39) orienté parallèlement à la direction longitudinale est réalisé au niveau du côté de recouvrement (34) du boîtier (31) pour la coopération avec un verrou (61) agencé de manière basculante au niveau du cadre de vélo (10).

13. Cadre de vélo (10) selon la revendication 12, **caractérisé en ce que** le boîtier (31) de l'unité d'alimentation en énergie (30) est doté d'un gradin (37) au niveau du côté arrière (36), dans lequel le tenon de verrouillage (39) est agencé à une distance du côté supérieur (38) du gradin (37), et est agencé de préférence entre deux cames de retenue (42, 43) réalisées au niveau du côté supérieur (38) du gradin (37).

14. Cadre de vélo (10) selon la revendication 12 ou 13, **caractérisé en ce que** le boîtier (31) de l'unité d'alimentation en énergie (30) est doté d'une douille de charge (45) séparée au niveau du côté de recouvrement (34).

15. Vélo électrique avec un cadre de vélo (10), avec un moteur électrique (5) intégré dans le cadre de vélo (10) et avec une unité d'alimentation en énergie (30) fixée ou pouvant être fixée de manière amovible au niveau du cadre de vélo (10) pour le moteur électrique (5), **caractérisé en ce que** le cadre de vélo (10) est réalisé selon l'une quelconque des revendications 1 à 11 et/ou le cadre de vélo (10) avec unité d'alimentation en énergie (30) est réalisé selon l'une quelconque des revendications 12 à 14.
